# EUROPEAN PATENT APPLICATION

(11) **EP 1 253 538 A1**
(43) Date of publication of application: **30.10.2002**
(21) Application number: 02076385.0
(22) Date of filing: 10.04.2002
(51) Int. Cl.: G06F 17/60

(54) **Test design**

(30) Priority: 27.04.2001 EP 01303895
(71) Applicant: UNILEVER N.V., 3013 AL Rotterdam (NL); UNILEVER PLC, London EC4P 4BQ (GB)
(72) Inventor: Bataveljic, Ogi, Wirral, CH6 3JW (GB); Harbron, Christopher George, Wirral, CH6 3JW (GB); Patel, Shail, Wirral, CH6 3JW (GB)
(74) Representative: Joppe, Hermina L. P.

(57) **Abstract**

A method for adaptive test design whereby
(a) a first group of respondents is asked a first set of questions;
(b) based on results of (a) another group of respondents is asked another group of questions;
(c) step (b) is repeated n-1 times whereby the results of part or all of the previous test-rounds are taken as a basis for identifying the group of respondents and the group of questions;
(d) a final test is designed based on the results of test-rounds 1 to n.

## Description

### Field of the Invention

The present invention relates to a method for designing tests in particular a method for the generation of an interactive test for example a questionnaire for use in consumer testing or market research.

### Background of the Invention

Questionnaires are a well-known tool for testing. For example questionnaires are often used to identify preferences of the respondents. These preferences can then for example be used for targeted supplier- client interactions for example via targeted mailing or advertising.

WO 01/46891 (not pre-published) describes a computer implemented method comprising the distribution of a first survey, receiving responses, analysing the responses and obtaining a second survey.
US 4603232 discloses a method for dissemination, deployment (hardware/infrastructure) and collation of personalised surveys.
US 5842195 discolses a method for authoring/storing of survey documents.
US 5893098 discloses a method for deployment (hardware) of branched surveys and obtaining responses.
US 6009420 discloses an expert system for interactive task completion for decision support.

A problem with the use of questionnaires is that the quality and reliability of the answers often is not optimal. Reasons for this can be that the respondent is not particularly interested in answering the questionnaires or the respondents find the questionnaires too long and hence too time consuming. Another problem is that response rates are frequently poor, resulting in limited quantities of data which may be biased.

Previous solutions to these issues have proposed splitting the complete questionnaire into a number of subsample components and randomly assigning each respondent to receive two of these subsamples or eliciting a random sample of questions from each individual.

The present invention aims at providing an adaptive questionnaire system whereby on the one hand reliable results can be obtained and on the other hand the time necessary for completing the questionnaire can be minimised.

Accordingly the present invention provides a system comprising
- (a): storage means for storing a number of questions (Qx)
- (b1): first filtering means for selection a first sub-set (Q1) of said questions;
- (b2): second filtering means for selection of a first sub-set (R1) of respondents
- (c): interaction means for posing said first sub-set (Q1) of questions to said first group of respondents (R1) and receiving their answers (A1) to said first sub-set of questions
- (d1): filtering means for selecting another subset (Qn) of questions out of said (Qx) of questions;
- (d2): filtering means for selecting another subset (Rn) of respondents;
- (e): interaction means for posing said subset (Qn) of questions to a group of respondents (Rn) and receiving their answers (An) to said sub-set of questions
- (f): Evaluation means ensuring that steps (d) and (e) are repeated for n=2 to a desired end-point.

The end-point may be determined in several ways. For example it may be a pre-determined number of iterations, for example n=10 or n=100, or when some data-based measure has been achieved. Examples of data based measures include the standard error of the mean for one or more key variables being less than an acceptable amount, a statistically significant difference being detected for a key variable and/or variables or enough data having been collected to correctly categorise a large pre-determined proportion of respondents.

If desired the system may also comprise output means for producing for end-value n the sub-set (Sn) of questions. Said output means may for example be a printer to print the final questionnaire.

In a first preferred embodiment of the invention the system starts from a relatively large number of questions Q1 whereby each subsequent subset of questions Qn is a selection out of Q(n-1). This embodiment would start with a relatively large number of questions, which are posed to the first group of respondents, wherefore each subsequent subset of questions would have a reduced number of questions. Especially preferably the number of respondents Rn is always more than the number of respondents R(n-1). This preferred embodiment of the system is especially suitable for use in environments wherein there is no initial clarity about which questions are especially significant to identify the desired properties of the respondents.

In another preferred embodiment of the invention the system starts from a relatively large number of respondents R1 whereby each subsequent set of respondents Rn is a selection out of R(n-1). This embodiment would start with a relatively large groups of respondents, whereafter each subsequent set of respondents would have a reduced number of respondents. Especially preferably in this embodiment the number of questions Qn is always more than the number of questions Q(n-1).This preferred embodiment of the system is especially suitable for use in environments wherein there is no initial clarity about which respondents are especially interesting for further investigation.

The invention will now be explained in more detail.

Figure 1 illustrates the various components of a possible system according to the invention

Figure 2 illustrates a comparison of receiver operating curves for models generated using all questions and the questions selected.

Figure 3 Comparison Of Receiver Operating Curves For A Cross-Validation Data Set

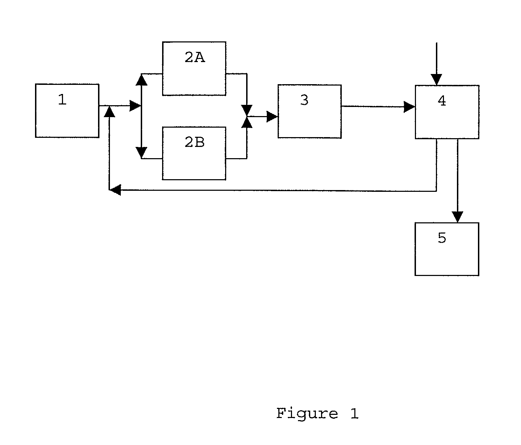

Figure 1 shows storage means (1). Said storage means comprises a number of questions Qx and details relating to (potential) respondents Rx and may also store the results of asking some or all questions to some or all of the respondents. Said storage means may also contain details relating to the questions for example clusterings indicating questions of similar content or measures of the past usefulness of questions when included in similar tests.

Said storage means may be any suitable data storage means preferably for electronic data storage for example computer memory, tapes, CD's, dvd.

Filtering means 2 has access to the data in storage means (1) and by means of a filtering operation selects the appropriate set of questions (Q1) and the appropriate set of respondents (R1). This selection can be by various methods, for example the initial selection may be a random selection or a specified sampling scheme or based upon measures of the past usefulness of questions or a combination of these techniques whereafter subsequent selections are for example based on a results obtained in previous rounds.

The filtering is advantageously automated but if desired the filtering can be (partly) based on external input e.g. from an operator.

The filtering means will produce a subset of questions Q1 and a subset of respondents R1. The number of questions in subset Q1 can be any number from 1 up to the and including the total number of available questions. Similarly the number of respondents in subset R1 can be any number from 1 up to and including the total number of available respondents. However for the purpose of the invention at least one of the subsets Q1 and R1 should have a number of questions/respondents which is less than the number in Qx/Rx respectively.

The selected questions etc are then transferred to an interaction means (3) for posing the selected questions Q1 to the selected respondents R1 and receiving their responses.

Interaction means (3) may involve any suitable method but may for example be a computer terminal at which the questions are shown to the respondents and at which the respondents may input their responses. Other suitable interaction means may for example be access means to connected communication systems, for example questions may be posed to the respondents by electronic means such as computer networks, internet, or other data-communication systems for example via telecommunication such as mobile phones. Otherwise questions may be printed to paper, completed by the respondents and read back into electronic storage, either through manual entry or automatically, for example by scanning.

The responses of the various respondents are then collected in output receiving means (4). Again this can be any suitable data storage means as described above.

Filtering means (2) have access to the data in the output receiving means (4). Based on this output (optionally supplemented with further input such as for example manual input or further data input) the filtering means select which test set-up is to be used in the following test-round. For example said filtering unit may determine an adapted sub-set of questions (Qn) and/or an adapted set of respondents (Rn) for the next test-round.

The testing routine may be repeated for a number of times n whereafter the end results may advantageously be stored or shown in data storage and/or display means (5).

Again for each test-round normally for each value of n at least one of Qn and Rn should have a number of questions/respondents which is less than Qx/Rx respectively.

The testing routine may be performed on any appropriate time scale. For example the filtering, interaction and collection of responses may occur in real time as the test is unfolding or in batches over a longer time period. In a first preferred embodiment the various iterations n may advantageously follow each other in time (iteration n is followed by iteration n+1 etc). However for some applications it may also be advantageous to carry out multiple iterations at the same time e.g. iterations n, n+1 ...., n+p are carried out simultaneously.

The above described system may advantageously be used for the design of tests in particular the design of questionnaires.

A key element of the system of the invention is an adaptive process to come to the final test design. As described the system will generally use n steps or loops.

The number of steps or loops n can be any value from 2 to the number of respondents.

For on-line systems for example wherein the interaction with the respondents is over the internet n can be relatively high for example n will advantageously be greater than 5, very advantageously greater than 20, for example up to 1,000 or even 10,000 or 100,000. Typically in such an environment it will be possible to have a high degree of personalisation of the questionnaires per respondent. For the higher values of n it may generally be advantageous to carry out one or more loops at the same time, for example various respondents can receive the same starting question and then dependent on their response they will receive further questions. This method of the invention is illustrated in the examples.

For other systems for example offline systems whereby subset of questions are printed and then posed to a set of respondents the value for n will for practical reasons be fairly low for example from 2 to 20, more general 2 to 10. Very advantageously the system of the invention is used in 2, 3, 4 or 5 steps.

The filtering step for determining after each step which questions or respondents can best be used in the next step can be any suitable means for selection. For example calculations can be done to select the most important questions. Suitable methods to do this are for example Correlations, Partial correlations, Principal Component Analysis, Factor Analysis, Multiple Regression, Stepwise Regression, Neural Networks, Automatic Relevance Determination, Decision Trees, Neurofuzzy Methods.

If desired the system of the invention can include one or more validation checks whereby selection of questions and or respondents are validated e.g. by checking back with a previous group of respondents.

The invention also relates to a method for adaptive test design using a system as described above.

The invention also relates to a method for adaptive test design whereby
- (a): a first group of respondents is asked a first set of questions;
- (b): based on results of (a) another group of respondents is asked another group of questions;
- (c): step (b) is repeated n-1 times whereby the results of part or all of the previous test-rounds are taken as a basis for identifying the group of respondents and the group of questions;
- (d): a final test is designed based on the results of test-rounds 1 to n.
The invention will now be illustrated in the following examples.

### Example 1

This preferred embodiment of the invention uses in the first test round a relatively large number of questions which are asked to a small group of respondents. In the second test round the number of questions is reduced and at the same time the number of respondents is increased. In the third test round the number of questions if further decreased and at the same time the number of respondents is increased. This leads to the final test whereby a limited relatively small number of questions can be posed to a relatively large group of respondents.

This method allows the careful test-design in a multiple stage process such that the majority of the respondents do only need to answer a limited number of questions while still the reliability and quality of the output is acceptable.

This preferred embodiment is therefore especially suitable if there is a need to streamline a testing questionnaire.

### Start:

Qx is 25 questions and Rx is 100 respondents.

### 1^{ST} ROUND

All 25 questions are posed to only 5 respondents and the output is collected;

### 2^{ND} Round

Based on the output for the first round the number of questions is reduced to 15, this new subset of questions is posed to a totally new group of of 30 respondents.

### 3^{rd} Round

Based on the output of the second and first round the number of question is reduced to 5 out of the 15 as used in the second round. This new subset is posed to the remaining 65 respondents.

### Final test

Based on the output of the 3^{rd} round the final test design is made consisting of 3 questions. This final test design can then be used as appropriate.

### Example 2

This example illustrates another preferred embodiment of the invention whereby in the first test round a limited number of questions is asked to a relatively large group of respondents. In the second round only a selection of the first group of respondents is used and these will be asked to answer an additional set of questions. In the third round a further limitation in the number of respondents is made and these are asked a number of additional questions. Finally a relatively small group of respondents is identified for asking them the final set of questions. This embodiment has the advantage that the respondents who are of most interest are subjected to further testing while there is no need to subject the less interesting respondents to an unnecessary long list of questions.
Start:
Qx is 50 questions and Rx is 100 respondents.

### 1^{ST} ROUND

2 questions are posed to all 100 respondents and the output is collected;

### 2^{ND} Round

Based on the output for the first round the number of respondents is reduced to 50, these are asked an additional set of 5 questions which have not been asked before.

### 3^{rd} Round

Based on the output of the second and first round the number of respondents is further is reduced to 15 out of the 50 as used in the second round. These respondents are asked an additional 10 questions.

### Final test

Based on the output of the 3^{rd} round the final core group of respondents is formed namely 5 key respondents out of the 15 of round three, these core respondents are asked all the remaining 28 questions.

### Example 3

This example illustrates an alternative method in accordance to the invention whereby different respondents receive personalised series of questions:

In the first round of questions each of the respondents (here R1-R8) will receive the same starting questions X1. Based on the answer to the first question the system will determine whether the questioning can usefully progress and if yes what the best next question can be.

In this case for respondent R1 the system determines that the questioning can stop after the first round. For respondents R2 R4 question X2 is posed in the second round, while for respondents R5-R8 question X3 is asked in the 2^{nd} round. In the third round respondents R2 and R5 are not longer included, while respondents R4 and R7 answer question X4 and R3 answers X4, R6 answers X2 and R8 answers X6. Only two respondents are included in the fourth round answering questions X6 and X4 respectively.
- R1:: X1
- R2:: X1 X2
- R3:: X1 X2 X4
- R4: X1 X2 X5 X6
- R5:: X1 X3
- R6:: X1 X3 X2
- R7:: X1 X3 X5 X4
- R8:: X1 X3 X6

Although this example is described with reference to individual questions the same methodology can advantageously be used if Xn represents a number of questions for example 1-100 questions, more general 2-20 or even 3-10.

This method of the invention can for example be represented in a tree structure, where respondents flow through the tree, and after each question there is a range of possible questions or an option of stopping. Note that potentially the same question could appear at different levels or in different branches of the tree.

### Example 4

A preferred embodiment of the invention is described below whereby the invention is used to develop a test to predict if a consumer is a most valued customer (MVC).

The starting point for developing the test is a set of demographic and lifestyle questions, X1-X30. For each of the potential respondents we already have data on whether they are most valued customers or not.

An initial random subset of 20% of the potential respondents are selected and requested to complete the full questionnaire. Using this data a backwards stepwise logistic regression model is fitted with the units of analysis being the individual respondents, the binary response being the indicator of most valued customer status and a significance level for retention of terms in the model of 0.9. Terms are included in the model as being either continuous, nominal or ordinal as appropriate. The terms which are not significant at this level are dropped from all further testing and analysis as the data so far collected suggests they are either unrelated to MVC status or that the information contained within this question is also contained within other questions. In either case there is little benefit in asking these questions to any further respondents.

The significant terms are then tested on a further random subset of 10% of the potential respondents not yet sampled. The data collected from these respondents is combined with the data from the first set of respondents and a backwards stepwise logistic regression model is fitted to the combined set of data with the same properties as before except a stricter significance level for retention of terms in the model of 0.8 is applied. Any terms which are not significant at this level are dropped from all further testing and analysis.

The system then continues through seven more iterations of this cycle, at each stage testing a further random subset of 10% of the potential respondents combining the results from these respondents with the results from all previous sets of respondents and performing a backwards stepwise logistic regression with a decreased significance level of retention for terms in the model.

After all the iterations all of the respondents will have been tested. There will be a residual set of questions which have been selected as being significant in all iterations and so will have been tested on all of the respondents. The final model will be derived from either all of these questions or from a subset according to some model selection process.

Table 1 shows the progress of the method.

This scheme reduced the total number of questions asked by 23%. The last group of respondents only had to answer 50% of the total number of questions.

To compare the method with the standard method of asking all questions to all respondents logistic models based on ten questions were generated. For the method described above these were the ten questions still selected at the end of the last iteration. For the standard method a forward stepwise procedure was applied to select ten questions from the complete set. These models were then applied to a cross-validation set of data, that is a set of data which was kept separate from and not used in the modelling process and receiver operating curves (ROCs) generated. ROCs compare the sensitivity and the specificity of the model, that is the number of MVCs that the model is able to detect and the number of non-MVCs that get falsely classified as MVCs.

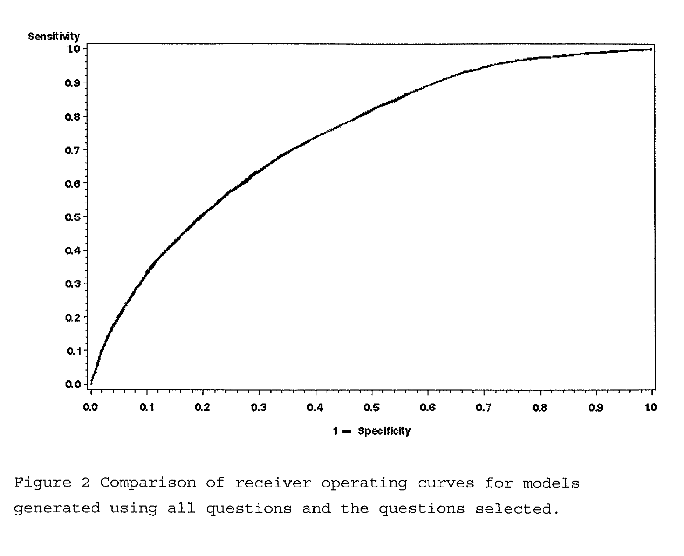

Figure 2 compares the receiver operating curves for models generated from the complete data set and following the method. The curves are practically identical, indicating that the predictive performance of the models are extremely similar. So by performing this method a model was generated with the same predictive power as from standard methods from asking many fewer questions.

When applied in a real-life situation, as opposed to the simulation described here, it may be expected that the response rate and quality of data may be greater leading to an improved quality of model using this method.

**Table 1**

| The type III p-values for each question over the iterations of the algorithm. An X indicates that the p-value is larger than the threshold value and the question is omitted from further questionnaires and analysis and model building. | | | | | | | | | |
|---|---|---|---|---|---|---|---|---|---|
| | Iteration | | | | | | | | |
| | 1 | 2 | 3 | 4 | 5 | 6 | 7 | 8 | 9 |
| % Of Total Respondents | 20% | 10% | 10% | 10% | 10% | 10% | 10% | 10% | 10% |
| %Of Respondents Used In Model | 20% | 30% | 40% | 50% | 60% | 70% | 80% | 90% | 100% |
| Threshold p-Value | 0.9 | 0.8 | 0.7 | 0.6 | 0.5 | 0.4 | 0.3 | 0.2 | 0.1 |

| Question | Type III p-value | | | | | | | | |
|---|---|---|---|---|---|---|---|---|---|
| X1 | <.01 | 0.05 | 0.05 | 0.13 | 0.16 | 0.31 | 0.35X | . | . |
| X2 | 0.67 | 0.05 | 0.12 | 0.42 | 0.32 | 0.79X | . | . | . |
| X3 | 0.36 | 0.19 | 0.72X | . | . | . | . | . | . |
| X4 | 0.53 | 0.33 | 0.11 | 0.14 | 0.16 | 0.13 | 0.05 | 0.02 | 0.02 |
| X5 | <.01 | <.01 | <.01 | <.01 | <.01 | <.01 | <.01 | <.01 | <.01 |
| X6 | 0.23 | 0.03 | 0.01 | 0.22 | 0.01 | <.01 | <.01 | <.01 | <.01 |
| X7 | 0.59 | 0.69 | 0.51 | 0.35 | 0.20 | 0.06 | <.01 | <.01 | <.01 |
| X8 | 0.65 | 0.84X | . | . | . | . | . | . | . |
| X9 | 0.02 | 0.02 | 0.06 | 0.36 | 0.11 | 0.03 | 0.04 | 0.06 | 0.08 |
| X10 | 0.50 | 0.65 | 0.64 | 0.41 | 0.71X | . | . | . | . |
| X11 | 0.92X | . | . | . | . | . | . | . | . |
| X12 | <.01 | 0.11 | 0.07 | 0.13 | 0.04 | 0.05 | 0.09 | 0.05 | 0.02 |
| X13 | 0.26 | 0.67 | 0.21 | 0.29 | 0.19 | 0.54X | . | . | . |
| X14 | 0.17 | 0.11 | 0.09 | 0.14 | 0.06 | 0.04 | 0.02 | 0.07 | 0.19X |
| X15 | 0.05 | 0.02 | 0.09 | 0.04 | 0.06 | 0.13 | 0.10 | 0.14 | 0.10X |
| X16 | 0.32 | 0.22 | 0.15 | 0.06 | 0.05 | 0.08 | 0.04 | 0.02 | 0.01 |
| X17 | 0.37 | 0.25 | 0.95X | . | . | . | . | . | . |
| X18 | 0.02 | 0.01 | 0.02 | 0.23 | 0.17 | 0.13 | 0.39X | . | . |
| X19 | 0.49 | 0.20 | 0.33 | 0.26 | 0.44 | 0.67X | . | . | . |
| X20 | 0.02 | 0.04 | <.01 | <.01 | <.01 | <.01 | <.01 | <.01 | <.01 |
| X21 | 0.48 | 0.28 | 0.23 | 0.34 | 0.21 | 0.35 | 0.50X | . | . |
| X22 | 0.09 | 0.93X | . | . | . | . | . | . | . |
| X23 | 0.39 | 0.32 | 0.31 | 0.76X | . | . | . | . | . |
| X24 | 0.74 | 0.95X | . | . | . | . | . | . | . |
| X25 | 0.67 | 0.58 | 0.49 | 0.15 | 0.11 | 0.10 | <.01 | 0.02 | <.01 |
| X26 | 0.18 | 0.51 | 0.13 | 0.12 | 0.08 | 0.03 | 0.11 | 0.04 | 0.11X |
| X27 | 0.87 | 0.41 | 0.14 | 0.10 | 0.16 | 0.10 | 0.13 | 0.08 | 0.14X |
| X28 | 0.04 | 0.19 | 0.03 | 0.02 | <.01 | <.01 | 0.02 | 0.16 | 0.18X |
| X29 | 0.45 | 0.06 | 0.02 | <.01 | <.01 | <.01 | 0.01 | <.01 | 0.06 |
| X30 | 0.52 | 0.29 | 0.66 | 0.88X | . | . | . | . | . |

Similar to example 4 alternative embodiments may involve different schemes utilising different numbers of steps, different p-value thresholds used in the stepwise regression and/or selecting different proportions of respondents in each step. Alternative models may be fitted for example a probit or log-log link function instead of the logistic link function in the regression. Alternatively the response variable may be continuous instead of binary where a linear stepwise regression model may be more appropriate. Alternative regression models may be used to model the respondents' responses, for example non-linear terms (for example quadratics, polynomials or splines) may be included in the regression models and the significance level for each question taken to account for all of the terms based upon that question. Alternatively different modelling approaches, for example neural nets, genetic algorithms may be used to model the response variable as a function of the respondents' responses.

Increased weighting may be given to respondents from later groups as their data may be considered more reliable than that from earlier respondents because they were asked a more limited number of questions. A suitable weighting scheme may be to weight respondents responses inversely proportionally to the number of questions that that respondent answered.

If additional information on the respondents is available prior to starting the study some more structured sampling scheme, for example stratified sampling, may be used in preference to random sampling in one or more steps of the system.

### Example 5

In this advantageous embodiment of the invention the starting point is similar to example 4. The questions have initially been ordered to reflect a prior assessment of their likelihood of being an important predictor of MVC status, X1, X2,...X30 where X1 is the question judged to be the most important predictor. The question judged most likely to be an informative predictor of most valued customer status, X1, is selected and asked to all respondents.

Using these results a logistic model with response variable most valued customer status and predictor variable, X1, is fitted (M1). The predicted probabilities of most valued customer status derived from the model are then examined for all respondents. Those respondents who are deemed to be categorised, i.e. with predicted probabilities below 0.3 or above 0.7 are dropped from further testing and analysis. Those respondents whose categorised is indeterminate, i.e. with predicted probabilities between 0.3 and 0.7 are then presented with the question judged to be second most likely to be an informative predictor of most valued customer status, X2.

The responses from this question are collated with the results from the same set of respondents for the original question and a second logistic model fitted (M2) with the same properties as (M1) except it uses two predictor variables.

The iterations continue until either the set of questions is exhausted or all respondents have been categorised.

At the end of this process we end up with a series of models M1,M2,...Mn. To categorise a future respondent, the respondent may be either asked all of the questions at one time or may be asked the questions in a sequential manner similar to above. Either way each of the sequential series of models may use the responses to generate a predicted probability of MVC status. The respondents responses are fed into the models in turn. If the predicted probability for a model is greater than 0.7 or less than 0.3, then the respondent may be categorised as a MVC or non-MVC respectively and the process finishes. Otherwise the process continues by using the next model.

Table 2 shows the proportion of panellists who were asked a question in each iteration. Overall only 17.7% of the number of questions were asked compared to the standard method of asking all questions to all respondents.

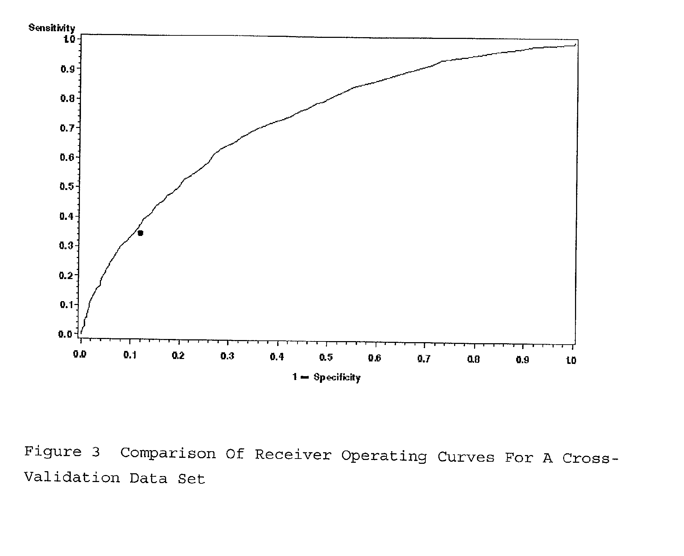

Figure 3 shows the ROCs comparing the performance on a cross-validation data set of the predictive models generated by this method with the predictive model generated by asking all questions to all respondents. Note that as under this method all respondents are categorised as being MVCs or not as opposed to generating a probability of being an MVC, the ROC for this method reduces to a single point. However this point lies on the ROC for the standard method. This has demonstrated a substantial reduction in the total number of questions asked whilst generating predictive models with similar levels of performance.

Alternative embodiments of this may group together questions, presenting them to respondents in groups rather than individually. The ordering of likely predictive power of the questions may be performed using a combination of expert knowledge and results from previous similar studies. The threshold probabilities above or below which a respondent is deemed to be categorised may be any appropriate value selected. The threshold values are not restricted to be symmetric about 0.5 and may also vary between iterations.

**Table 2**

| The proportion of panellists being asked questions in each iteration in the process. | | |
|---|---|---|
| Iteration | Question | Percent Of Respondents Asked Question |
| 1 | X5 | 100.0 |
| 2 | X20 | 37.2 |
| 3 | X9 | 37.2 |
| 4 | X7 | 33.7 |
| 5 | X25 | 27.0 |
| 6 | X8 | 24.0 |
| 7 | X16 | 22.1 |
| 8 | X4 | 21.6 |
| 9 | X12 | 15.8 |
| 10 | X23 | 14.1 |
| 11 | X29 | 13.0 |
| 12 | X15 | 12.8 |
| 13 | X26 | 12.8 |
| 14 | X30 | 12.8 |
| 15 | X28 | 12.5 |
| 16 | X6 | 12.4 |
| 17 | X27 | 12.2 |
| 18 | X14 | 12.0 |
| 19 | X13 | 11.9 |
| 20 | X2 | 11.9 |
| 21 | X22 | 11.7 |
| 22 | X10 | 11.5 |
| 23 | X3 | 11.0 |
| 24 | X18 | 10.3 |
| 25 | X19 | 9.2 |
| 26 | X1 | 8.1 |
| 27 | X21 | 6.7 |
| 28 | X17 | 4.2 |
| 29 | X24 | 2.2 |
| 30 | X11 | 0.0 |

## Claims

1. A system comprising
(a) storage means for storing a number of questions (Qx)
(b1) first filtering means for selection a first sub-set (Q1) of said questions;
(b2) second filtering means for selection of a first sub-set (R1) of respondents
(c) interaction means for posing said first sub-set (Q1) of questions to said first group of respondents (R1) and receiving their answers (A1) to said first sub-set of questions
(d1) filtering means for selecting another subset (Qn) of questions out of said (Qx) of questions;
(d2) filtering means for selecting another subset (Rn) of respondents;
(e) interaction means for posing said subset (Qn) of questions to a group of respondents (Rn) and receiving their answers (An) to said sub-set of questions
(f) Evaluation means ensuring that steps (d) and (e) are repeated for n=2 to a desired end-point.

2. A method for adaptive test design whereby a system in accordance to claim 1 is used.

3. A method in accordance to claim 2 wherein n is from 2 to 10.

4. A method in accordance to claim 2 wherein n is greater than 10.

5. A method according to claim 2 whereby the system starts from a relatively large number of questions Q1 whereby each subsequent subset of questions Qn is a selection out of Q(n-1).

6. A method according to claim 5 wherein no respondent is asked questions more than once.

7. A method according to claim 5 wherein each set of respondents, Ri, consists of a single respondent.

8. A method according to claim 2 whereby the system starts from a relatively large number of respondents R1 whereby each subsequent set of respondents Rn is a selection out of R(n-1).

9. Method according to claim 8 wherein no question is asked to the same respondent more than once.

10. A method according to claim 8 wherein each set of questions, Qi, consists of a single question.

11. A method according to claim 2 wherein the process is carried out in real-time.

12. A method according to claim 2 whereby the order of the questions can be expressed as a tree structure where the decision of which branch of questions to follow for each respondent is determined as a result of the responses to previous questions.

13. A method for adaptive test design whereby
(a) a first group of respondents is asked a first set of questions;
(b) based on results of (a) another group of respondents is asked another group of questions;
(c) step (b) is repeated n-1 times whereby the results of part or all of the previous test-rounds are taken as a basis for identifying the group of respondents and the group of questions;
(d) a final test is designed based on the results of test-rounds 1 to n.
